# EUROPEAN PATENT APPLICATION

(11) **EP 3 382 919 A1**
(43) Date of publication of application: **03.10.2018**
(21) Application number: 17826125.1
(22) Date of filing: 24.01.2017
(51) Int. Cl.: H04J 14/02

(54) **COMMUNICATION METHOD, DEVICE AND SYSTEM FOR PASSIVE OPTICAL NETWORK (PON)**

(71) Applicant: HUAWEI TECHNOLOGIES CO., LTD., Guangdong 518129 (CN)
(72) Inventor: LIN, Huafeng, Shenzhen Guangdong 518129 (CN); LIU, Dekun, Shenzhen Guangdong 518129 (CN)
(74) Representative: Pfenning, Meinig & Partner mbB
(86) International application number: PCT/CN2017/072512
(87) International publication number: WO 2018/137154

(57) **Abstract**

Embodiments of the present invention provide a communication method, apparatus, and system for a PON. The PON includes an OLT and a first ONU. The method includes: communicating, by the OLT, with the first ONU by using one downlink wavelength λdx, where the one downlink wavelength λdx is any one of N downlink wavelengths λd1 to λdN; and communicating, by the OLT, with the first ONU by using one uplink wavelength λu0, where the one uplink wavelength λu0 is different from any one of M uplink wavelengths λu1 to λuM. The N downlink wavelengths λd1 to λdN and the M uplink wavelengths λu1 to λuM are wavelength values configured for a second ONU, N and M are both integers greater than or equal to 2, and x is any value from 1 to M. Therefore, complexity and costs of the PON system are reduced.

## Description

### TECHNICAL FIELD

This application relates to access network communications technologies, and in particular, to a communication method, apparatus, and system for a passive optical network PON.

### BACKGROUND

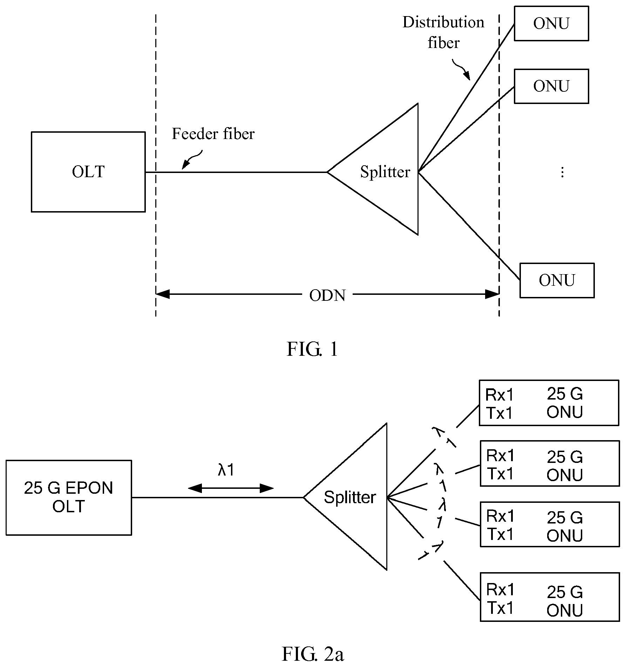

A passive optical network (PON) is a system that provides "last-mile" network access. The PON is a point-to-multipoint network. FIG. 1 is a schematic architectural diagram of a PON in the prior art. As shown in FIG. 1, an architecture of the PON includes an optical line terminal (OLT) located in a central office, an optical distribution network (ODN), and multiple optical network units (ONU) that are located on a customer premise. The ODN includes a feeder fiber, a passive optical splitter (Splitter), and a distribution fiber.

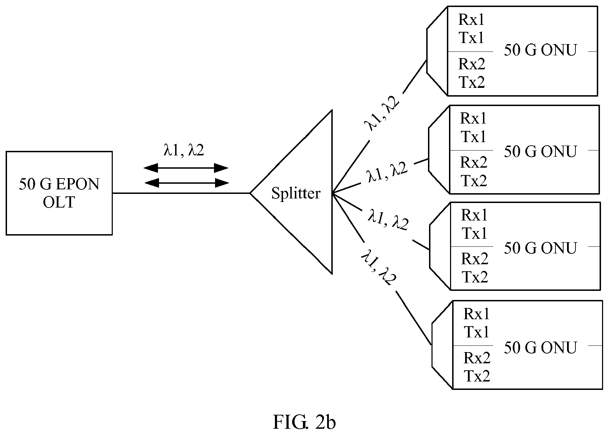

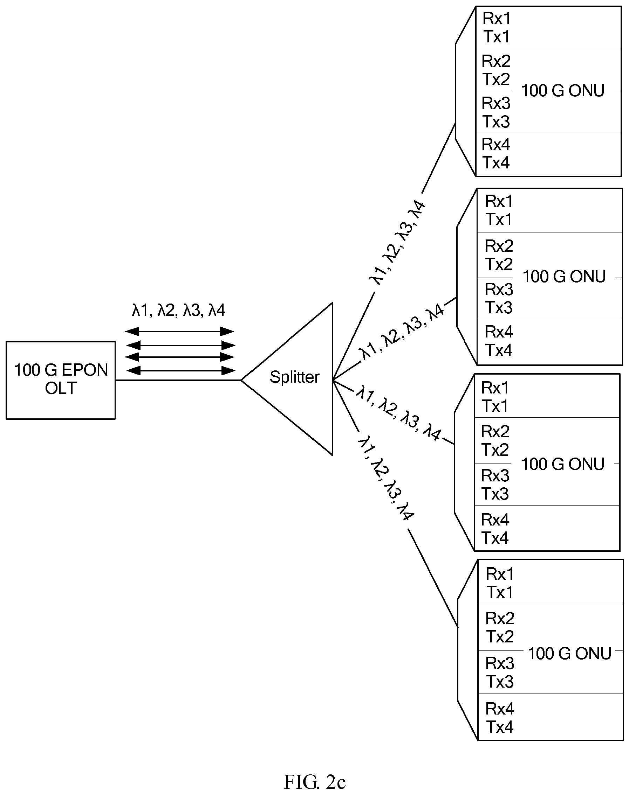

As a volume of user data of a PON system keeps growing, a bandwidth requirement becomes increasingly high. Generally, there are two methods for improving bandwidth of the PON system. One is to improve a line rate of each wavelength of the PON system, and the other method is to improve a quantity of allowable operating wavelengths of the PON system, that is, to use more wavelength paths in the PON system. For example, the Institute of Electrical and Electronics Engineers (IEEE) has defined PONs of three capacities: 25 Gbit/s Ethernet passive optical network (EPON), 50 Gbit/s EPON, and 100 Gbit/s EPON. FIG. 2a is a schematic architectural diagram of a 25 Gbit/s EPON; FIG. 2b is a schematic architectural diagram of a 50 Gbit/s EPON; and FIG. 2c is a schematic architectural diagram of a 100 Gbit/s EPON. In the 25 Gbit/s EPON, each 25 G ONU is configured with one pair of uplink and downlink wavelengths: λ1. λ1 may include a downlink wavelength λd1 and an uplink wavelength λu1. In the 50 Gbit/s EPON, each 50 G ONU is configured with two pairs of uplink and downlink wavelengths: λ1 and λ2. λ1 may include a downlink wavelength λd1 and an uplink wavelength λu1, and λ2 may include a downlink wavelength λd2 and an uplink wavelength λu2. In the 100 Gbit/s EPON, each 100 G ONU is configured with four pairs of uplink and downlink wavelengths: λ1, λ2, λ3, and λ4. λ1 may include a downlink wavelength λd1 and an uplink wavelength λu1; λ2 may include a downlink wavelength λd2 and an uplink wavelength λu2; λ3 may include a downlink wavelength λd3 and an uplink wavelength λu3; and λ4 may include a downlink wavelength λd4 and an uplink wavelength λu4.

When one PON system includes both a 25 G ONU and a 100 G ONU, λd1 and λu1 that are used by the 25 G ONU are one pair of uplink and downlink wavelengths of the 100 G ONU. An allowable center wavelength operating range of λd1 and λu1 that are used by the 25 G ONU is consistent with an allowable center wavelength operating range of λd1 and λu1 that are used by the 100 G ONU, and a width of the operating range of the center wavelength is +/-1 nm. Because the width of +/-1 nm that is of the operating range of the center wavelength and used by λu1 is relatively small, the ONU needs to be equipped with a cooling apparatus. Consequently, an architecture of the PON system is relatively complex, and costs are relatively high.

### SUMMARY

Embodiments of the present invention provide a communication method, apparatus, and system for a passive optical network PON, so as to resolve problems of a complex architecture and high costs of a PON system.

According to a first aspect, an embodiment of the present invention provides a communication method for a passive optical network PON, where the PON includes an optical line terminal OLT and a first optical network unit ONU, and the method includes: communicating, by the OLT, with the first ONU by using one downlink wavelength λdx, where the one downlink wavelength λdx is any one of N downlink wavelengths λd1 to λdN; and communicating, by the OLT, with the first ONU by using one uplink wavelength λu0, where the one uplink wavelength λu0 is different from any one of M uplink wavelengths λu1 to λuM; and the N downlink wavelengths λd1 to λdN and the M uplink wavelengths λu1 to λuM are wavelength values configured for a second ONU, N and M are both integers greater than or equal to 2, and x is any value from 1 to N (including 1 and N).

The first ONU and the second ONU may be deployed in one PON system. The second ONU may be any ONU other than the first ONU. The first ONU may be an ONU with a single uplink wavelength, that is, an ONU that has one uplink wavelength. The second ONU may be an ONU with multiple uplink wavelengths, that is, an ONU that has multiple uplink wavelengths. A downlink wavelength λdx of the first ONU may be any one of the N downlink wavelengths of the second ONU, so that the first ONU and the second ONU may share one optical transmitter Tx on an OLT side, and network deployment costs are reduced. The uplink wavelength λu0 of the first ONU is identical to none of the M uplink wavelengths of the second ONU, so that the first ONU may have a relatively wide wavelength range. Therefore, cooling is not required, manufacturing costs of an ONU are reduced, and complexity and costs of a PON system are reduced.

In a possible implementation, an allowable center wavelength operating range of the one uplink wavelength λu0 is different from an allowable center wavelength operating range of any one of the M uplink wavelengths λu1 to λuM. For example, the allowable center wavelength operating range of the one uplink wavelength λu0 is from λu0-10 nm to λu0+10 nm, and allowable center wavelength operating ranges of λu1 to λuM are all from λu1-1 nm to λu1+1 nm.

In a possible implementation, a wavelength width of the one uplink wavelength λu0 may be different from a wavelength width of any one of the M uplink wavelengths λu1 to λuM. For example, a wavelength width of the one uplink wavelength λu0 may be 20 nm, and a wavelength width of any one of the M uplink wavelengths λu1 to λuM may be less than λu0, for example, +/-1 nm, +/-1.5 nm, or even smaller.

In a possible implementation, the first ONU may have one downlink wavelength or may have multiple downlink wavelengths. When the first ONU has one downlink wavelength, any one of the N downlink wavelengths of the second ONU may be used as the downlink wavelength of the first ONU. When the first ONU has multiple downlink wavelengths, a downlink wavelength of the first ONU may be selected from the N downlink wavelengths of the second ONU. The first ONU and the second ONU use a same downlink wavelength, so that the first ONU and the second ONU may share a same optical transmitter on an OLT side, and OLT costs are reduced.

In a possible implementation, the first ONU may be a symmetric ONU, for example, a 10 G or 25 G symmetric ONU that has one uplink wavelength and one downlink wavelength and whose uplink rate and downlink rate are equal. Alternatively, the first ONU may be an asymmetric ONU, for example, a 25 G/10 G asymmetric ONU that has one uplink wavelength and one downlink wavelength and has an uplink rate of 10 Gbit/s and a downlink rate of 25 Gbit/s, or a 100 G/25 G asymmetric ONU that has one uplink wavelength and multiple downlink wavelengths, with each wavelength having a rate of 25 Gbit/s.

In a possible implementation, the second ONU may be a symmetric ONU, that is, M is equal to N. Alternatively, the second ONU may be an asymmetric ONU, for example, M is less than N.

In a possible implementation, the OLT sends a registration message to the first ONU by using the one downlink wavelength λdx, and the OLT receives a registration response message from the first ONU by using the one uplink wavelength λu0. Communication between the OLT and the ONU may include a registration process. In the registration process, the OLT receives the response message from the first ONU by using the one uplink wavelength λu0. In this process, the first ONU does not require cooling and costs are saved.

In a possible implementation, the OLT sends a timeslot grant message to the first ONU by using the one downlink wavelength λdx, where the timeslot grant message includes a granted timeslot of the one uplink wavelength λu0; and the OLT receives an uplink signal from the first ONU by using the granted timeslot of the one uplink wavelength λu0. Communication between the OLT and the ONU may include a data transmission process. In the data transmission process, the OLT receives the uplink signal from the first ONU by using the one uplink wavelength λu0. In this process, the first ONU does not require cooling and costs are saved.

According to a second aspect, an embodiment of the present invention provides a communication method for a passive optical network PON, where the PON includes an optical line terminal OLT and a first optical network unit ONU, and the method includes: communicating, by the first ONU, with the OLT by using one downlink wavelength λdx, where the one downlink wavelength λdx is any one of N downlink wavelengths λd1 to λdN; and communicating, by the first ONU, with the OLT by using one uplink wavelength λu0, where the one uplink wavelength λu0 is different from any one of M uplink wavelengths λu1 to λuM; and the N downlink wavelengths λd1 to λdN and the M uplink wavelengths λu1 to λuM are wavelength values configured for a second ONU, N and M are both integers greater than or equal to 2, and x is any value from 1 to N (including 1 and N).

The first ONU and the second ONU may be deployed in one PON system. The second ONU may be any ONU other than the first ONU. The first ONU may be an ONU with a single uplink wavelength, that is, an ONU that has one uplink wavelength. The second ONU may be an ONU with multiple uplink wavelengths, that is, an ONU that has multiple uplink wavelengths. A downlink wavelength λdx of the first ONU may be any one of the N downlink wavelengths of the second ONU, so that the first ONU and the second ONU may share one optical transmitter Tx on an OLT side, and network deployment costs are reduced. The one uplink wavelength λu0 of the first ONU is different from the M uplink wavelengths of the second ONU, so that the first ONU may have a relatively wide wavelength range. Therefore, cooling is not required, manufacturing costs of an ONU are reduced, and complexity and costs of a PON system are reduced.

In a possible implementation, an allowable center wavelength operating range of the one uplink wavelength λu0 is different from an allowable center wavelength operating range of any one of the M uplink wavelengths λu1 to λuM. For example, the allowable center wavelength operating range of the one uplink wavelength λu0 is from λu0-10 nm to λu0+10 nm, and allowable center wavelength operating ranges of λu1 to λuM are all from λu1-1 nm to λu1+1 nm.

In a possible implementation, a wavelength width of the one uplink wavelength λu0 may be different from a wavelength width of any one of the M uplink wavelengths λu1 to λuM. For example, a wavelength width of the one uplink wavelength λu0 may be 20 nm, and a wavelength width of any one of the M uplink wavelengths λu1 to λuM may be less than λu0, for example, +/-1 nm, +/-1.5 nm, or even smaller.

In a possible implementation, the first ONU may have one downlink wavelength or may have multiple downlink wavelengths. When the first ONU has one downlink wavelength, any one of the N downlink wavelengths of the second ONU may be used as the downlink wavelength of the first ONU. When the first ONU has multiple downlink wavelengths, a downlink wavelength of the first ONU may be selected from the N downlink wavelengths of the second ONU. The first ONU and the second ONU use a same downlink wavelength, so that the first ONU and the second ONU may share a same optical transmitter on an OLT side, and OLT costs are reduced.

In a possible implementation, the first ONU may be a symmetric ONU, for example, a 10 G or 25 G symmetric ONU that has one uplink wavelength and one downlink wavelength and whose uplink rate and downlink rate are equal. Alternatively, the first ONU may be an asymmetric ONU, for example, a 25 G/10 G asymmetric ONU that has one uplink wavelength and one downlink wavelength and has an uplink rate of 10 Gbit/s and a downlink rate of 25 Gbit/s, or a 100 G/25 G asymmetric ONU that has one uplink wavelength and multiple downlink wavelengths, with each wavelength having a rate of 25 Gbit/s.

In a possible implementation, the second ONU may be a symmetric ONU, that is, M is equal to N. Alternatively, the second ONU may be an asymmetric ONU, for example, M is less than N.

In a possible implementation, the method includes: receiving, by the first ONU, a registration message from the OLT by using the one downlink wavelength λdx; and sending, by the first ONU, a registration response message to the OLT by using the one uplink wavelength λu0. Communication between the OLT and the ONU may include a registration process. In the registration process, the first ONU sends the registration response message to the OLT by using the one uplink wavelength λu0. In this process, the first ONU does not require cooling and costs are saved.

In a possible implementation, the method includes: receiving, by the first ONU, a timeslot grant message from the OLT by using the one downlink wavelength λdx, where the timeslot grant message includes a granted timeslot of the one uplink wavelength λu0; and sending, by the first ONU, an uplink signal to the OLT by using the granted timeslot of the one uplink wavelength λu0. Communication between the OLT and the ONU may include a data transmission process. In the data transmission process, the first ONU sends the uplink signal to the OLT by using the one uplink wavelength λu0. In this process, the first ONU does not require cooling and costs are saved.

According to a third aspect, an embodiment of the present invention provides an OLT. The OLT can implement functions of method steps in the first aspect and any possible implementation of the first aspect. The functions may be implemented by using hardware, or may be implemented by executing corresponding software. The hardware or the software includes one or more modules corresponding to the foregoing functions. The module may be software and/or hardware.

In a possible implementation, a structure of the OLT includes an optical transmitter and an optical receiver. The optical transmitter and the optical receiver are configured to support communication between the OLT and an ONU. The optical transmitter is configured to send, to the ONU, information or an instruction that is related to the foregoing method. The optical receiver is configured to receive the information or the instruction sent by the ONU. The OLT may further include a memory. The memory is configured to couple the OLT to a processor and store a program instruction and data that are necessary for the OLT.

According to a fourth aspect, an embodiment of the present invention provides an ONU. The ONU can implement functions of method steps in the second aspect and any possible implementation of the second aspect. The functions may be implemented by using hardware, or may be implemented by executing corresponding software. The hardware or the software includes one or more modules corresponding to the foregoing functions. The module may be software and/or hardware.

In a possible implementation, a structure of the ONU includes an optical transmitter and an optical receiver. The optical transmitter and the optical receiver are configured to support communication between an OLT and the ONU. The optical transmitter is configured to send, to the OLT, information or an instruction that is related to the foregoing method. The optical receiver is configured to receive the information or the instruction sent by the OLT. The ONU may further include a memory. The memory is configured to couple the ONU to a processor and store a program instruction and data that are necessary for the ONU.

According to another aspect, an embodiment of the present invention provides a PON system. The PON system includes the OLT and the ONU in the foregoing aspects.

Still another aspect of this application provides a computer readable storage medium. The computer readable storage medium stores an instruction. When running on a computer, the instruction makes the computer execute the method in the foregoing aspects.

Yet still another aspect of this application provides a computer program product that includes an instruction. When running on a computer, the instruction makes the computer execute the method in the foregoing aspects.

### BRIEF DESCRIPTION OF DRAWINGS

To describe the embodiments of the present invention more clearly, the following briefly introduces the accompanying drawings required for describing the embodiments.
FIG. 1 is a schematic architectural diagram of a PON in the prior art;
FIG. 2a is a schematic architectural diagram of a 25 Gbit/s EPON;
FIG. 2b is a schematic architectural diagram of a 50 Gbit/s EPON;
FIG. 2c is a schematic architectural diagram of a 100 Gbit/s EPON;
FIG. 3a is a schematic architectural diagram of a PON system 300a according to an embodiment of the present invention;
FIG. 3b is a schematic architectural diagram of another PON system 300b according to an embodiment of the present invention;
FIG. 4a is a schematic structural diagram of an OLT 400a according to an embodiment of the present invention;
FIG. 4b is a schematic structural diagram of an OLT 400b according to an embodiment of the present invention;
FIG. 5 is a schematic diagram of wavelength distribution according to an embodiment of the present invention;
FIG. 6a is a schematic structural diagram of an ONU 600a according to an embodiment of the present invention;
FIG. 6b is a schematic structural diagram of an ONU 600b according to an embodiment of the present invention;
FIG. 6c is a schematic structural diagram of an ONU 600c according to an embodiment of the present invention;
FIG. 7 is a schematic diagram of signaling interaction in registration of an ONU according to an embodiment of the present invention;
FIG. 8 is a schematic diagram of interaction in data transmission of an ONU according to an embodiment of the present invention;
FIG. 9 is an example flowchart of a communication method for a passive optical network PON according to an embodiment of the present invention;
FIG. 10 is an example flowchart of a communication method for a passive optical network PON according to an embodiment of the present invention; and
FIG. 11 is a schematic structural diagram of a network device 1100 according to an embodiment of the present invention.

### DESCRIPTION OF EMBODIMENTS

The following describes the technical solutions in the embodiments of the present invention with reference to the accompanying drawings in the embodiments of the present invention.

To improve bandwidth of a passive optical network PON system, a PON system that supports multiple wavelengths (or wavelength paths/wavelength channels) has been proposed, for example, the 50 G EPON and the 100 G EPON that are mentioned in the background. In the PON system, an ONU may be configured with multiple pairs (two or more pairs) of uplink and downlink wavelengths, or may be configured with one pair of uplink and downlink wavelengths. The ONU may have different rates when quantities of wavelengths are different. For example, an ONU with one pair of uplink and downlink wavelengths may include an ONU that has uplink and downlink rates of 10 G or 25 G, and an ONU with multiple pairs of uplink and downlink wavelengths may include an ONU that has uplink and downlink rates of 100 G or 50 G. In the foregoing types of ONUs, an uplink rate may be equal to a downlink rate, and a quantity of uplink wavelengths may be equal to a quantity of downlink wavelengths. These ONUs are referred to as symmetric ONUs.

In an actual network, uplink service traffic may be different from downlink service traffic. For example, for a residential user, downlink service traffic of the residential user is usually far higher than uplink service traffic. Therefore, an uplink rate may be different from a downlink rate in one ONU. For example, a downlink rate in λd1 may be 25 Gbit/s, and a corresponding uplink rate may be 10 Gbit/s. This ONU forms a 25 G/10 G asymmetric ONU. In another example, a quantity of downlink wavelengths and a quantity of uplink wavelengths of an ONU may be different. For example, an ONU may have four downlink wavelengths λd1, λd2, λd3, and λd4 and only one uplink wavelength λu1, and each wavelength has a rate of 25 Gbit/s, forming a 100 G/25 G asymmetric ONU; or an ONU may have two uplink wavelengths λu1 and λu2, forming a 100 G/50 G asymmetric ONU.

The ONU with a single uplink wavelength according to this embodiment of the present invention may include an ONU that has only one uplink wavelength and one downlink wavelength, or may include an ONU that has one uplink wavelength and multiple downlink wavelengths. The ONU with multiple uplink wavelengths may include an ONU with multiple uplink wavelengths and multiple downlink wavelengths, or an ONU with multiple uplink wavelengths and one downlink wavelength. Generally, any ONU that has only one uplink wavelength, whether symmetric or asymmetric, may be the ONU with a single uplink wavelength according to this embodiment of the present invention.

In a network deployment process, an ONU with multiple uplink wavelengths and an ONU with a single uplink wavelength may be deployed in one PON system and share a network device, for example, an ODN, so as to save network upgrade costs. This embodiment of the present invention may be applied to a PON system in which an ONU with multiple uplink wavelengths and an ONU with a single uplink wavelength coexist, and may save manufacturing costs of the ONU with a single uplink wavelength. This embodiment of the present invention may be applied to multiple types of PON systems, for example, an asynchronous transfer mode PON (APON), a broadband PON (BPON), an Ethernet PON (EPON), a 10 gigabit EPON (10 G-EPON), a gigabit-capable PON (GPON), an XGPON, a wavelength division multiplexing PON (WDM-PON), a time- and wavelength-division multiplexed PON (TWDM-PON), and may be also applied to a next-generation PON (NGPON) system, an NG-PON2, or the like.

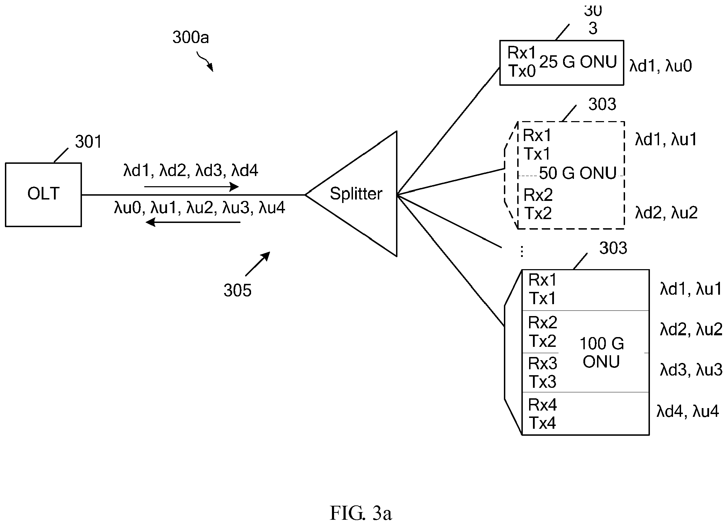

FIG. 3a is a schematic architectural diagram of a PON system 300a according to an embodiment of the present invention. As shown in 3a, the PON system 300a includes at least one OLT 301, multiple ONUs 303, and an ODN 305. The OLT 301 is connected to the multiple ONUs 303 via the ODN 305 in a point-to-multipoint manner. A direction from the OLT 301 to the ONUs 303 may be a downlink direction, and a direction from the ONUs 303 to the OLT 301 may be an uplink direction. In the downlink direction, the OLT 301 may send a downlink wavelength signal to the ONUs 303; and in the uplink direction, the ONUs 303 may send uplink wavelength signals to the OLT 301. A wavelength signal may be an optical signal carrier that has a specific wavelength, and is used to carry data, information, a message, or the like. The multiple ONUs 303 may include at least one ONU with a single uplink wavelength, for example, a 25 G ONU, or may further include at least one ONU with multiple uplink wavelengths, for example, a 100 G ONU. Optionally, the multiple ONUs 303 may further include at least one ONU that has another rate, for example, a 50 G ONU. An ONU with a single uplink wavelength uses one pair of uplink and downlink wavelengths. For example, a 25 G ONU uses a downlink wavelength λd1 and an uplink wavelength λu0. An ONU with multiple uplink wavelengths uses two or more pairs of uplink and downlink wavelengths. For example, a 50 G ONU uses downlink wavelengths λd1 and λd2 and uplink wavelengths λu1 and λu2, and a 100 G ONU uses downlink wavelengths λd1, λd2, λd3, and λd4 and uplink wavelengths λu1, λu2, λu3, and λu4.

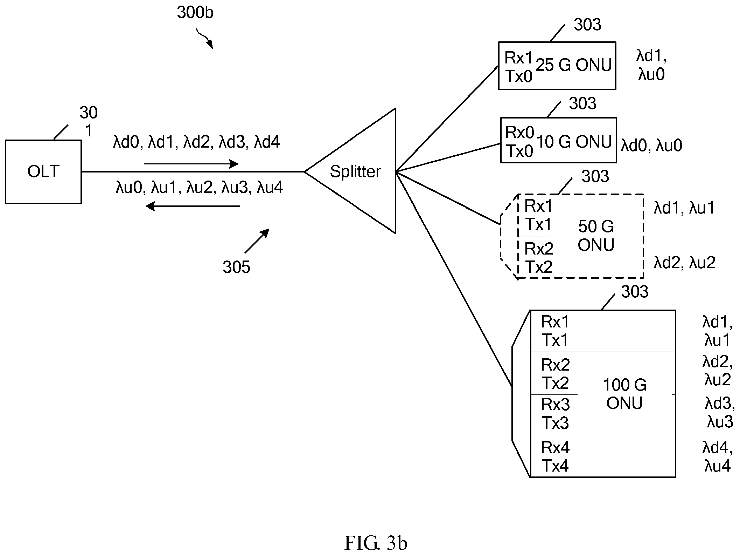

FIG. 3b is a schematic architectural diagram of another PON system 300b according to an embodiment of the present invention. A difference between FIG. 3b and FIG. 3a is that, in FIG. 3b, the PON system 300b may further include an ONU that has a single uplink wavelength and another rate, for example, a 10 G ONU. Optionally, the PON system 300b may further include an asymmetric ONU with a single uplink wavelength, for example, a 25 G/10 G asymmetric ONU, or a 100 G/25 G asymmetric ONU, which is not shown in the figure. In the PON system 300b, a 25 G ONU and a 10 G ONU may use a same uplink wavelength λu0, and a 25 G ONU and a 10 G ONU may use different downlink wavelengths. For example, a 10 G ONU uses a downlink wavelength λd0, and a 25 G ONU uses a downlink wavelength λd1. Optionally, a 25 G ONU and a 10 G ONU may use a same downlink wavelength.

The following separately describes structures and operating principles of network devices in PON systems 300a and 300b.

### OLT

The OLT 301 is usually located in a central position, for example, a central office (CO). The OLT 301 may act as a transmission medium between the ONU 303 and an upper-layer network (not shown in the figure) to forward, to the ONU 303 as a downlink signal, a signal received from the upper-layer network, or forward, to the upper-layer network, an uplink signal received from the ONU 303.

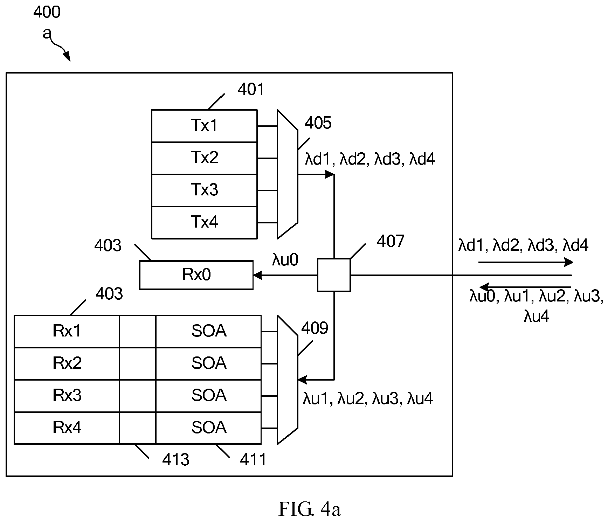

FIG. 4a is a schematic structural diagram of an OLT 400a according to an embodiment of the present invention. For the OLT 301 in FIG. 3a, refer to a structure of the OLT 400a. As shown in FIG. 4a, the OLT 400a may include optical transmitters Tx1 to Tx4 401, optical receivers Rx0 to Rx4 403, a multiplexer 405, an optical coupler 407, and a demultiplexer 409. The optical transmitters Tx1 to Tx4 401 are configured to generate downlink wavelength signals, for example, the four downlink wavelength signals λd1, λd2, λd3, and λd4 shown in the figure. The four downlink wavelength signals are combined into one line of optical signal after passing through the multiplexer 405, and are sent to the ODN 305 after passing through the optical coupler 407. The optical receivers Rx0 to Rx4 403 are configured to receive uplink wavelength signals, for example, the five uplink wavelength signals λu0, λu1, λu2, λu3, and λu4 shown in the figure. The uplink wavelength signals λu0, λu1, λu2, λu3, and λu4 are split into two lines after passing through the optical coupler 407. One line includes λu0, which is received by Rx0, and the other line includes λu1, λu2, λu3, λu4, which are respectively received by Rx1 to Rx4. Optionally, a preamplifier, for example, a semiconductor optical amplifier (SOA) 411, may be added in front of the optical receivers Rx1 to Rx4. The uplink wavelength signals λu1, λu2, λu3, and λu4 are split after passing through the optical demultiplexer 409; then enter the SOA 411 for optical power amplification; then pass through a narrow-band pass filter 413 for filtering out a spontaneously emitted optical signal for valid optical signals; and then enter the optical receiver Rx, for example, an avalanche photodiode (APD). A sensitivity gain provided by the preamplifier usually depends on a gain-to-noise figure of the preamplifier. The narrow-band pass filter may perform well in filtering out an out-band noise from a signal, and may effectively improve a gain brought by the amplifier. For example, when no narrow-band pass filter is used, the amplifier can provide a gain of only 1.3 dB, and after one narrow-band pass filter is added, the amplifier can provide a gain of 4.3 dB and sensitivity can be significantly improved.

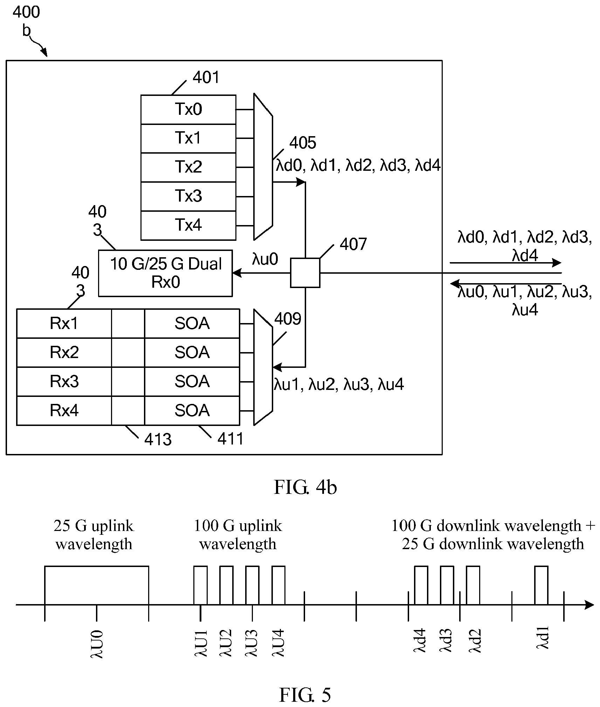

FIG. 4b is a schematic structural diagram of an OLT 400b according to an embodiment of the present invention. For the OLT 301 in FIG. 3b, refer to a structure of the OLT 400b. A difference between the OLT 400b in FIG. 4b and the OLT 400a in FIG. 4a is that the OLT 400b in FIG. 4b has one additional 10 G optical transmitter Tx0 that is configured to generate a downlink wavelength signal λd0 sent to a 10 G ONU. The OLT 400b may receive uplink wavelength signals λu0 from a 25 G ONU and the 10 G ONU by using a same optical receiver 10 G/25 G Dual Rx0. In a PON system in which a 10 G ONU and a 25 G ONU coexist, the 25 G ONU and the 10 G ONU may share one uplink wavelength λu0, the OLT may use a same optical receiver Rx0 to receive the uplink wavelength signals λu0 of the 10 G ONU and the 25 G ONU, and network upgrade costs are saved.

In the OLT that uses a preamplifier, a wavelength signal needs to be distributed to a relatively narrow range. This may facilitate filtering performed by the narrow-band pass filter behind the preamplifier. The OLT receives an uplink wavelength signal from the ONU, so that the preamplifier on an OLT side provides a sufficient gain to meet a power requirement. A width of an allowable center wavelength operating range (may be a "wavelength width" for short) of the uplink wavelength of the ONU may usually be +/-1 nm or +/-1.5 nm or an even smaller width. FIG. 5 is a schematic diagram of wavelength distribution according to an embodiment of the present invention. As shown in FIG. 5, a 100 G ONU may be configured with four downlink wavelengths λd1, λd2, λd3, and λd4 that have a same wavelength width and four uplink wavelengths λu1, λu2, λu3, and λu4 that have a same wavelength width. In a 25 G ONU, λd1 of the four downlink wavelengths λd1 to λd4 of the 100 G ONU may be configured as a downlink wavelength, and one uplink wavelength λu0 that has a relatively large wavelength width may be configured. For example, a wavelength width of λu1 to λu4 may be +/-1 nm or +/-1.5 nm, or between +/-1 nm and +/-1.5 nm, or smaller than +/-1 nm, and a wavelength width of λu0 is greater than a wavelength width of any one of λu1 to λu4, for example, +/-10 nm.

Table 1 shows an example of allowable center wavelength operating ranges of downlink wavelengths λd1 to λd4 and uplink wavelengths λu0 to λu4. An allowable center wavelength operating range of λu0 may be different from an allowable center wavelength operating range of any one of four uplink wavelengths λu1 to λu4 of a 100 G ONU. A wavelength width of λu0 may be different from a wavelength width of any one of λu1 to λu4. For example, a center wavelength of λu1 is 1289.71 nm, an allowable center wavelength operating range of λu1 is 1288.71 nm to 1290.71 nm, and a wavelength width is 2 nm; a center wavelength of λu2 is 1294.16 nm, an allowable center wavelength operating range of λu2 is 1293.16 nm to 1295.16 nm, and a wavelength width is 2 nm; a center wavelength of λu3 is 1298.65 nm, an allowable center wavelength operating range of λu3 is 1297.65 nm to 1299.65 nm, and a wavelength width is 2 nm; a center wavelength of λu4 is 1303.16 nm, an allowable center wavelength operating range of λu4 is 1302.16 nm to 1304.16 nm, and a wavelength width is 2 nm; and a center wavelength of λu0 is 1270 nm, an allowable center wavelength operating range of λu0 is 1260 nm to 1280 nm, and a wavelength width is 20 nm.

**Table 1**

| **Wavelength value (wavelength)** | **Wavelength operating range (range/band)** |
|---|---|
| λd1 | 1334.78 ± 1 nm |
| λd2 | 1349.20 ± 1 nm |
| λd3 | 1354.08 ± 1 nm |
| λd4 | 1358.99 ± 1 nm |
| λu1 | 1289.71 ± 1 nm |
| λu2 | 1294.16 ± 1 nm |
| λu3 | 1298.65 ± 1 nm |
| λu4 | 1303.16 ± 1 nm |
| λu0 | 1270 ± 10 nm |

### ONU

The ONU 303 may be distributed in user side positions, for example, customer premises. The ONU 303 may act as a medium between the OLT 301 and user equipment. For example, the ONU 303 may forward, to the user equipment, a downlink signal received from the OLT 301, or forward, to the OLT 301 as an uplink signal, a signal received from the user equipment. The user equipment may include a terminal device, for example, a personal computer (PC) or a portable electronic device. It should be understood that the ONU 303 is similar to an optical network terminal (ONT) in structure. Therefore, in this embodiment of the present invention, the ONU and the ONT are interchangeable.

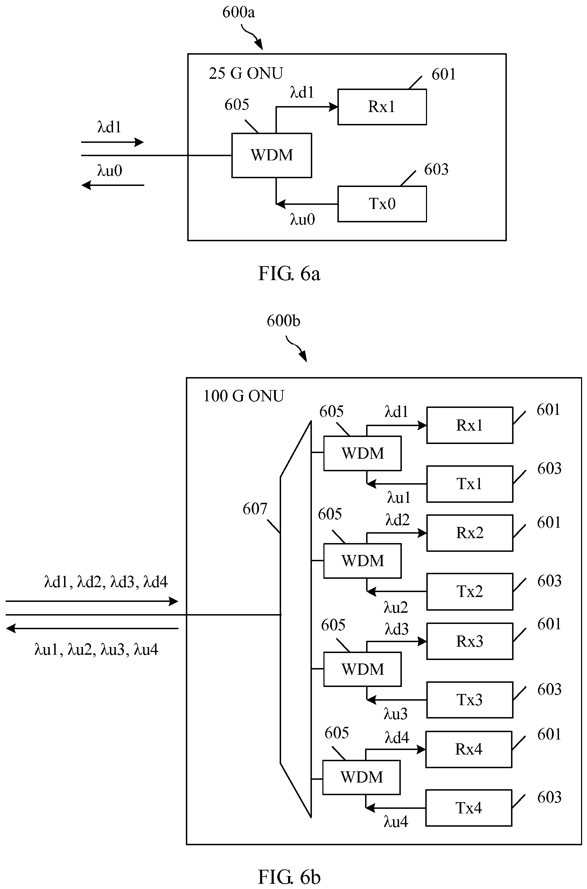

FIG. 6a is a schematic structural diagram of an ONU 600a according to an embodiment of the present invention. The ONU 600a may be a 25 G ONU. As shown in FIG. 6a, the ONU 600a may include an optical receiver Rx1 601, an optical transmitter Tx0 603, and a WDM 605. The optical receiver Rx1 601 is configured to receive a downlink wavelength signal λd1 from an OLT, and the optical transmitter Tx0 603 is configured to send an uplink wavelength signal λu0 to the OLT. The WDM 605 is configured to perform wavelength division multiplexing on the uplink wavelength signal and the downlink wavelength signal.

FIG. 6b is a schematic structural diagram of an ONU 600b according to an embodiment of the present invention. The ONU 600b may be a 100 G ONU. As shown in FIG. 6b, the ONU 600b may include optical receivers Rx1 to Rx4 601, optical transmitters Tx1 to Tx4 603, a WDM 605, and an optical multiplexer 607. The optical receivers Rx1 to Rx4 601 are configured to respectively receive downlink wavelength signals λd1 to λd4 from an OLT, and the optical transmitters Tx1 to Tx4 603 are configured to send uplink wavelength signals λu1 to λu4 to the OLT. The WDM 605 is configured to perform wavelength division multiplexing on each pair of uplink wavelength signal and downlink wavelength signal. The optical multiplexer 607 is configured to perform demultiplexing on the downlink wavelength signals λd1 to λd4 and multiplexing on the uplink wavelength signals λu1 to λu4.

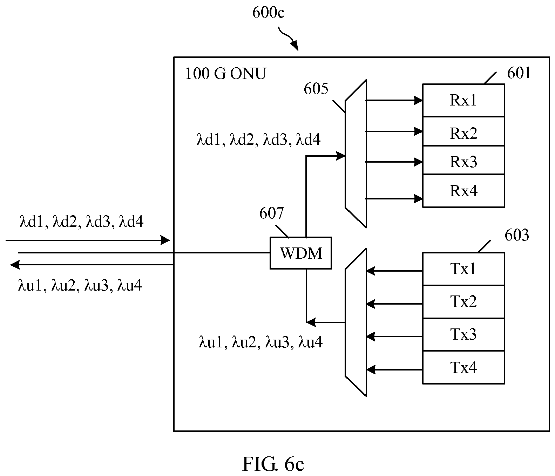

FIG. 6c is a schematic structural diagram of an ONU 600c according to an embodiment of the present invention. Alternatively, the ONU 600c may be a 100 G ONU. A difference between FIG. 6c and FIG. 6b is the WDM 605 and the optical multiplexer 607 are deployed in different positions.

A structure of a 10 G ONU is similar to that of a 25 G ONU, and a difference is that a downlink wavelength used by the 10 G ONU may be different from a downlink wavelength λd1 used by the 25 G ONU and line rates of the wavelengths are different. A structure of a 50 G ONU is similar to that of a 100 G ONU, and a difference is that optical receivers include Rx1 and Rx2 and optical transmitters include Tx1 and Tx2. Details are not described herein.

Different ONUs may be configured with a same wavelength. For example, the downlink wavelength λd1 used by a 25 G ONU may be one downlink wavelength of a 50 G ONU or a 100 G ONU. When different ONUs use a same wavelength, the different ONUs may use different timeslots on the wavelength by means of time division multiplexing. For example, a 25 G ONU and a 100 G ONU use different timeslots at the downlink wavelength λd1 by means of time division multiplexing. Alternatively, one ONU may be configured with multiple different wavelengths, or different ONUs are configured with different wavelengths. One ONU or different ONUs may use different wavelengths by means of wavelength division multiplexing. For example, a 100 G ONU may use four different downlink wavelengths λd1 to λd4 or four different uplink wavelengths λu1 to λu4 by means of wavelength division multiplexing. A 25 G ONU and a 100 G ONU may use five different uplink wavelengths λu0 to λu4 by means of wavelength division multiplexing.

### ODN

The PON system 300 may implement the ODN 305 between the OLT 301 and the ONUs 303 without using any active component. For example, the ODN 305 may include a passive optical splitter (Splitter) or a passive optical component such as a multiplexer or an optical fiber. The ODN 305 may use an optical splitter that has a split ratio of 1:4, 1:8, 1:6, 1:32, or 1:64. For example, the figure shows a splitter with a split ratio of 1:4, including one common port and four branch ports. The splitter is connected to a feeder fiber and the OLT 301 by using the common port, and the splitter is connected to the four ONUs 303 by using the four branch ports and the distribution fibers respectively. Optionally, the ODN 305 may further improve the split ratio by using two or more stages of optical splitters.

In this embodiment of the present invention, in a PON system in which an ONU with a single uplink wavelength and an ONU with multiple uplink wavelengths coexist, one wavelength that is different from any one of the multiple uplink wavelengths of the ONU with multiple uplink wavelengths is configured as the uplink wavelength of the ONU with a single uplink wavelength. In this way, the uplink wavelength of the ONU with a single uplink wavelength has a relatively wide center wavelength operating range, so that cooling is not required and complexity and costs of the PON system are reduced.

The following describes a process and a principle of communication between an OLT and an ONU. The communication between the OLT and the ONU may include online registration of the ONU and data transmission of the ONU. In the process of the communication between the OLT and the ONU, the OLT sends a downlink wavelength signal to the ONU, and the ONU sends an uplink wavelength signal to the OLT. Therefore, the OLT needs to be configured with an uplink wavelength, and the ONU needs to be configured with a downlink wavelength. The wavelengths may be directly configured on optical transmitters and optical receivers of the OLT and the ONU. For example, a transmit wavelength of a laser or a receive wavelength of an APD is adjusted on the OLT or the ONU to a specific wavelength value. Alternatively, the wavelengths may be dynamically configured by using a network management system or the OLT. For example, the OLT dynamically configures a specific wavelength value to a transmit wavelength of a laser of the ONU or a receive wavelength of an APD.

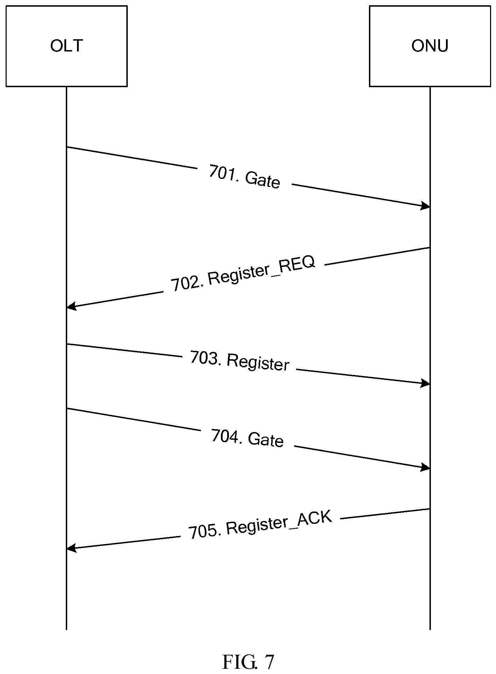

FIG. 7 is a schematic diagram of signaling interaction in registration of an ONU according to an embodiment of the present invention. A registration process of an ONU with a single uplink wavelength is described by using a 25 G ONU as an example. Refer to FIG. 7.

701. An OLT periodically generates a valid discovery time window on a broadcast channel of a downlink wavelength λd1, for example, generates a discovery time window by using a gate message. The gate message may include a time and a length of the discovery window.

702. After receiving the gate message using an optical receiver, when a cycle of the discovery time window in the gate message starts, the 25 G ONU (ONU for short in steps 703 to 705) sends a registration request message at an uplink wavelength λu0. For example, the registration request message may be a Register_REQ message.

703. After receiving the registration request message from the ONU, the OLT allocates a logical link ID (LLID) of the ONU to the ONU and sends a registration message to the ONU at the downlink wavelength λd1 to complete ranging. The registration message may include information such as the LLID of the ONU or a synchronization time required by the OLT.

704. The OLT sends a timeslot grant message, for example, a gate message, to the ONU at the downlink wavelength λd1. The timeslot grant message includes a granted timeslot of the uplink wavelength λu0, that is, a granted timeslot on which the ONU is allowed to send a registration response message at the uplink wavelength λu0. Optionally, the timeslot grant message may be carried in the register message sent by the OLT to the ONU.

705. After the register message is received, the ONU returns a registration response message in the granted timeslot of the uplink wavelength λu0 in the timeslot grant message. For example, the registration response message may be a Register_ACK message.

After receiving the registration response message, the OLT may complete ranging to calculate a distance from the ONU to the OLT or time required for transmitting information between the ONU and the OLT.

Optionally, in step 703, the ranging may be implemented by using the gate message in step 701 and the Register REQ message in step 702. That is, the ranging may be completed after step 702, or may be completed after step 705.

A registration process of an ONU with multiple uplink wavelengths is described by using a 100 G ONU as an example. A signaling interaction process of registration of the 100 G ONU is similar to that of a 25 G ONU. Refer to FIG. 7 again.
step 701. An OLT periodically generates a valid discovery time window on a broadcast channel of one or more downlink wavelengths (for example, one or more of downlink wavelengths λd1 to λd4), for example, generates a discovery time window by using a gate message. The gate message may include a time and a length of the discovery window.
step 702. After receiving the gate message using an optical receiver, when a cycle of the discovery time window in the gate message starts, the 100 G ONU (ONU for short in steps 703 to 705) sends, to the OLT, a registration request message at one or more of uplink wavelengths (for example, one or more of uplink wavelengths λu1 to λu4). For example, the registration request message may be a Register_REQ message. The registration request message may include wavelength information of the ONU, for example, a quantity of uplink wavelength paths, a quantity of downlink wavelength paths, and a wavelength path. The uplink wavelength paths may include four uplink wavelengths λu1 to λu4, and the downlink wavelength paths may include four downlink wavelengths λd1 to λd4.
step 703. After receiving the registration request message of the ONU, the OLT allocates an LLID of the ONU and path identifiers of all wavelength paths to the ONU. The OLT sends a register message on each downlink wavelength path (for example, the downlink wavelengths λd1 to λd4) to complete ranging of each wavelength path. The register message may include information such as the LLID of the ONU or a synchronization time required by the OLT.
step 704. The OLT sends a timeslot grant message on each downlink wavelength path (for example, the downlink wavelengths λd1 to λd4). The timeslot grant message includes a granted timeslot of each uplink wavelength (for example, uplink wavelengths λu1 to λu4), that is, a granted timeslot on which the ONU is allowed to send a registration response message at the uplink wavelengths λu1 to λu4. For example, the OLT sends, at the downlink wavelength λd1, a timeslot grant message that includes a granted timeslot of the uplink wavelength λu1, and sends, at the downlink wavelength λd2, a timeslot grant message that includes a granted timeslot of the uplink wavelength λu2, ..., and so on. Optionally, the timeslot grant message may be carried in the register message sent by the OLT to the ONU.
step 705. After receiving the register message, the ONU returns a registration response message in the granted timeslots of the uplink wavelengths λu1 to λu4 in the timeslot grant message. For example, the registration response message may be a Register_ACK message.

After receiving the registration response message, the OLT may complete ranging to calculate a distance from the ONU to the OLT or time required for transmitting information between the ONU and the OLT.

Optionally, in step 703, the ranging may be implemented by using the gate message in step 701 and the Register_REQ message in step 702. That is, the ranging may be completed after step 702, or may be completed after step 705.

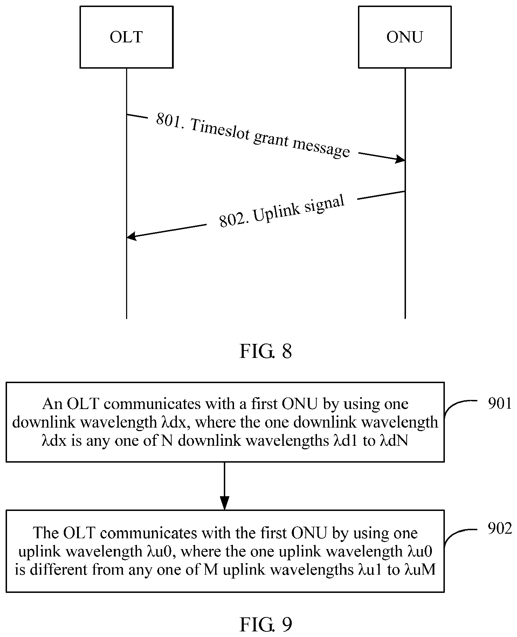

FIG. 8 is a schematic diagram of interaction in data transmission of an ONU according to an embodiment of the present invention. After registration is complete, data transmission may be performed between the ONU and an OLT. A data transmission process of an ONU with a single uplink wavelength is described by using a 25 G ONU as an example. Refer to FIG. 8.
step 801. The OLT sends a timeslot grant message to the 25 G ONU at a downlink wavelength λd1, where the timeslot grant message may include a granted timeslot of the uplink wavelength λu0 of the 25 G ONU. The granted timeslot of the uplink wavelength λu0 is a timeslot that can be used by the 25 G ONU to send an uplink signal.
step 802. The 25 G ONU sends an uplink signal to the OLT by using the uplink wavelength λu0 in the granted timeslot that is of the uplink wavelength λu0 and that is included in the timeslot grant message.

A data transmission process of an ONU with multiple uplink wavelengths is described by using a 100 G ONU as an example. An interaction process of data transmission of the 100 G ONU is similar to that of a 25 G ONU. Refer to FIG. 8 again.

step 801. The OLT sends a first timeslot grant message to the 100 G ONU at a downlink wavelength λd1, where the first timeslot grant message may include a granted timeslot of the uplink wavelength λu1 of the 100 G ONU. The OLT sends a second timeslot grant message to the 100 G ONU at a downlink wavelength λd2, where the second timeslot grant message may include a granted timeslot of the uplink wavelength λu2 of the 100 G ONU. The OLT sends a third timeslot grant message to the 100 G ONU at a downlink wavelength λd3, where the third timeslot grant message may include a granted timeslot of the uplink wavelength λu3 of the 100 G ONU. The OLT sends a timeslot grant message to the 100 G ONU at a downlink wavelength λd4, where the timeslot grant message may include a granted timeslot of the uplink wavelength λu4 of the 100 G ONU.

When granting an uplink timeslot, the OLT needs to perform unified scheduling and calculation on multiple wavelength paths to allocate different timeslots to ONUs that use a same wavelength. For each uplink wavelength, time when uplink signals sent by different ONUs on a same wavelength reach an optical receiver of the OLT cannot overlap, so that a conflict is prevented. For example, a 100 G ONU and a 50 G ONU have same uplink wavelengths λu1 and λu2, and the 100 G ONU and the 50 G ONU use different timeslots at the uplink wavelengths λu1 and λu2 by means of time division multiplexing.
step 802. The 100 G ONU sends an uplink signal to the OLT by using the uplink wavelength λu1 in the granted timeslot that is of the uplink wavelength λu1 and that is included in the timeslot grant message. The 100 G ONU sends an uplink signal to the OLT by using the uplink wavelength λu2 in the granted timeslot that is of the uplink wavelength λu2 and that is included in the timeslot grant message. The 100 G ONU sends an uplink signal to the OLT by using the uplink wavelength λu3 in the granted timeslot that is of the uplink wavelength λu3 and that is included in the timeslot grant message. The 100 G ONU sends an uplink signal to the OLT by using the uplink wavelength λu4 in the granted timeslot that is of the uplink wavelength λu4 and that is included in the timeslot grant message.

FIG. 9 is an example flowchart of a communication method for a passive optical network PON according to an embodiment of the present invention. The PON includes an optical line terminal OLT and a first optical network unit ONU. The method includes the following steps:
step 901: The OLT communicates with the first ONU by using one downlink wavelength λdx, where the one downlink wavelength λdx is any one of N downlink wavelengths λd1 to λdN.
step 902. The OLT communicates with the first ONU by using one uplink wavelength λu0, where the one uplink wavelength λu0 is different from any one of M uplink wavelengths λu1 to λuM.

The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, an allowable center wavelength operating range of the one uplink wavelength λu0 is different from an allowable center wavelength operating range of any one of the M uplink wavelengths λu1 to λuM. Optionally, a wavelength width of the one uplink wavelength λu0 may be different from a wavelength width of any one of the M uplink wavelengths λu1 to λuM.

A process of communication between the OLT and the ONU may include a registration process and a data transmission process.

Optionally, the OLT sends a registration message to the first ONU by using the one downlink wavelength λdx; and the OLT receives a registration response message from the first ONU by using the one uplink wavelength λu0.

Optionally, the OLT sends a timeslot grant message to the first ONU by using the one downlink wavelength λdx, where the timeslot grant message includes a granted timeslot of the one uplink wavelength λu0; and the OLT receives an uplink signal from the first ONU by using the granted timeslot of the one uplink wavelength λu0.

Method steps shown in FIG. 9 may be implemented by the OLT shown in FIG. 4a or FIG. 4b. For example, any one of optical transmitters Tx1 to Tx4 are configured to communicate with the first ONU by using one downlink wavelength λdx, where the one downlink wavelength λdx is any one of N downlink wavelengths λd1 to λdN; and an optical receiver Rx0 is configured to communicate with the first ONU by using one uplink wavelength λu0, where the one uplink wavelength λu0 is different from any one of M uplink wavelengths λu1 to λuM. The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, an allowable center wavelength operating range of the one uplink wavelength λu0 is different from an allowable center wavelength operating range of any one of the M uplink wavelengths λu1 to λuM. Optionally, a wavelength width of the one uplink wavelength λu0 may be different from a wavelength width of any one of the M uplink wavelengths λu1 to λuM.

A process of communication between the OLT and the ONU may include a registration process and a data transmission process.

Optionally, any one of the optical transmitters Tx1 to Tx4 sends a registration message to the first ONU by using the one downlink wavelength λdx; and the optical receiver Rx0 receives a registration response message from the first ONU by using the one uplink wavelength λu0.

Optionally, any one of the optical transmitters Tx1 to Tx4 sends a timeslot grant message to the first ONU by using the one downlink wavelength λdx, where the timeslot grant message includes a granted timeslot of the one uplink wavelength λu0; and the optical receiver Rx0 receives an uplink signal from the first ONU by using the granted timeslot of the one uplink wavelength λu0.

According to the technical solution provided in this embodiment of the present invention, a downlink wavelength of the first ONU is any one of downlink wavelengths of the second ONU, and the first ONU and the second ONU may share one optical transmitter on an OLT side. An uplink wavelength of the first ONU is different from any uplink wavelength of the second ONU. Therefore, the first ONU does not require cooling, and complexity and costs of a PON system are reduced.

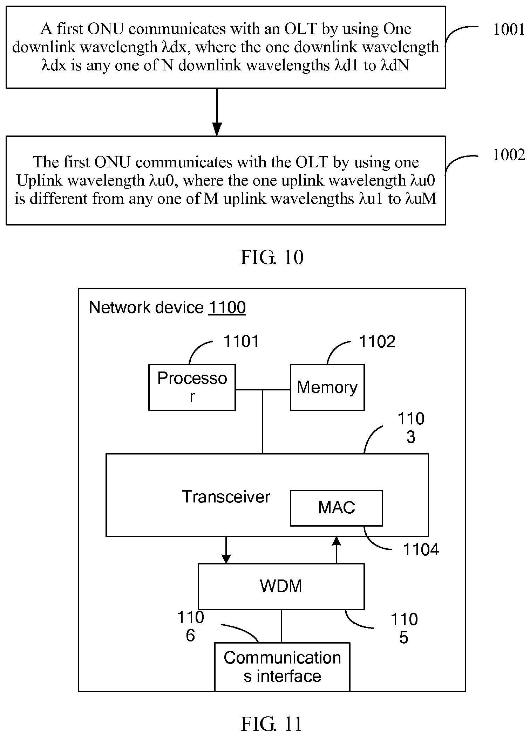

FIG. 10 is an example flowchart of a communication method for a passive optical network PON according to an embodiment of the present invention. The PON includes an optical line terminal OLT and a first optical network unit ONU. The method includes the following steps:
step 1001. The first ONU communicates with the OLT by using one downlink wavelength λdx, where the one downlink wavelength λdx is any one of N downlink wavelengths λd1 to λdN.
step 1002. The first ONU communicates with the OLT by using one uplink wavelength λu0, where the one uplink wavelength λu0 is different from any one of M uplink wavelengths λu1 to λuM.

The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, an allowable center wavelength operating range of the one uplink wavelength λu0 is different from an allowable center wavelength operating range of any one of the M uplink wavelengths λu1 to λuM. Optionally, a wavelength width of the one uplink wavelength λu0 may be different from a wavelength width of any one of the M uplink wavelengths λu1 to λuM.

Optionally, the first ONU receives a registration message from the OLT by using the one downlink wavelength λdx; and the first ONU sends a registration response message to the OLT by using the one uplink wavelength λu0.

Optionally, the first ONU receives a timeslot grant message from the OLT by using the one downlink wavelength λdx, where the timeslot grant message includes a granted timeslot of the one uplink wavelength λu0; and the first ONU sends an uplink signal to the OLT by using the granted timeslot of the one uplink wavelength λu0.

Method steps shown in FIG. 10 may be implemented by the ONU shown in FIG. 6a. For example, an optical receiver Rx1 is configured to communicate with the OLT by using one downlink wavelength λdx, where the one downlink wavelength λdx is any one of N downlink wavelengths λd1 to λdN; and an optical transmitter Tx0 is configured to communicate with the OLT by using one uplink wavelength λu0, where the one uplink wavelength λu0 is different from any one of M uplink wavelengths λu1 to λuM. The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, an allowable center wavelength operating range of the one uplink wavelength λu0 is different from an allowable center wavelength operating range of any one of the M uplink wavelengths λu1 to λuM. Optionally, a wavelength width of the one uplink wavelength λu0 may be different from a wavelength width of any one of the M uplink wavelengths λu1 to λuM.

Optionally, the optical receiver Rx1 is configured to receive a registration message from the OLT by using the one downlink wavelength λdx; and the optical transmitter Tx0 is configured to send a registration response message to the OLT by using the one uplink wavelength λu0.

Optionally, the optical receiver Rx1 is configured to receive a timeslot grant message from the OLT by using the one downlink wavelength λdx, where the timeslot grant message includes a granted timeslot of the one uplink wavelength λu0; and the optical transmitter Tx0 is configured to send an uplink signal to the OLT by using the granted timeslot of the one uplink wavelength λu0.

According to the technical solution provided in this embodiment of the present invention, a downlink wavelength of the first ONU is any one of downlink wavelengths of the second ONU, and the first ONU and the second ONU may share one optical transmitter on an OLT side. An uplink wavelength of the first ONU is different from any uplink wavelength of the second ONU. Therefore, the first ONU does not require cooling, and complexity and costs of a PON system are reduced.

An embodiment of the present invention provides a PON system, including an OLT, a first ONU, and a second ONU. The first ONU is configured with one downlink wavelength λdx and one uplink wavelength λu0, and the second ONU is configured with N downlink wavelengths λd1 to λdN and M uplink wavelengths λu1 to λuM. The OLT has the structure shown in FIG. 4a or FIG. 4b and implements the method steps shown in FIG. 9. The first ONU may have the structure shown in FIG. 6a and implement the method steps shown in FIG. 10. The second ONU may have the structure shown in FIG. 6b or FIG. 6c.

FIG. 11 is a schematic structural diagram of a network device 1100 according to an embodiment of the present invention. As shown in FIG. 11, the network device 1100 includes a processor 1101, a memory 1102, and a transceiver 1103. Optionally, the transceiver 1103 may further include a Medium Access Control (MAC) 1104. The network device 1100 may further include a WDM 1105 and a communications interface 1106. Any one OLT or ONU in the foregoing embodiments may have a structure similar to that of the network device 1100.

The processor 1101 may use a general-purpose central processing unit (CPU), a microprocessor, an application-specific integrated circuit (ASIC), or at least one integrated circuit to execute a related program, so as to implement the technical solutions provided in the embodiments of the present invention.

The memory 1102 may be a read-only memory (ROM), a static storage device, a dynamic storage device, or a random access memory (RAM). The memory 1102 may store an operating system and another application program. When the technical solutions provided in the embodiments of the present invention are implemented by using software or firmware, program code used to implement the technical solutions provided in the embodiments of the present invention is stored in the memory 1102 and is executed by the processor 1101.

The transceiver 1103 may include an optical transmitter and/or an optical receiver. The optical transmitter may be configured to send a signal, and the optical receiver may be configured to receive a signal. The optical transmitter may be implemented by using a light-emitting component, for example, a gas laser, a solid laser, a liquid laser, or a semiconductor laser. The optical receiver may be implemented by using an optical detector, for example, a photodetector or a photodiode.

The transceiver 1103 may be coupled to the WDM 1105. When a signal is sent to the communications interface 1106, the WDM 1105 acts as a multiplexer. When a signal is received from the communications interface 1106, the WDM 1105 acts as a demultiplexer. The WDM 1105 may also be referred to as an optical coupler. The communications interface 1106 may be coupled to the ODN.

When the network device 1100 is an OLT, the transceiver 1103 of the network device 1100 communicates with the first ONU by using one downlink wavelength λdx, where the one downlink wavelength λdx is any one of N downlink wavelengths λd1 to λdN; and communicates with the first ONU by using one uplink wavelength λu0, where the one uplink wavelength λu0 is different from any one of M uplink wavelengths λu1 to λuM. The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, the foregoing functions may be implemented under control of the processor 1101. For example, the processor 1101 executes code stored in the memory 1102, so as to implement the foregoing functions.

When the network device 1100 is an ONU, the transceiver 1103 of the network device 1100 communicates with the OLT by using one downlink wavelength λdx, where the one downlink wavelength λdx is any one of N downlink wavelengths λd1 to λdN; and communicates with the OLT by using one uplink wavelength λu0, where the one uplink wavelength λu0 is different from any one of M uplink wavelengths λu1 to λuM. The N downlink wavelengths λd1 to λdN and the M uplink wavelengths λu1 to λuM are wavelength values configured for a second ONU, N and M are both integers greater than or equal to 2, and x is any value from 1 to N (including 1 and N).

Optionally, the foregoing functions may be implemented under control of the processor 1101. For example, the processor 1101 executes code stored in the memory 1102, so as to implement the foregoing functions.

Specifically, the network device 1100 shown in FIG. 11 may implement the method steps shown in FIG. 9 or FIG. 10. It should be noted that, although the network device 1100 shown in FIG. 11 shows only the processor 1101, the memory 1102, the transceiver 1103, the MAC 1104, the WDM 1105, and the communications interface 1106, in a specific implementation process, a person skilled in the art should understand that the network device 1100 further includes another component that is necessary for implementing normal operation. In addition, according to a specific requirement, a person skilled in the art should understand that the network device 1100 may further include a hardware component for implementing an additional function. In addition, a person skilled in the art should understand that the network device 1100 may implement only a component required for implementing the embodiments of the present invention, and does not need to include all components shown in FIG. 11.

According to the technical solutions provided in the embodiments of the present invention, an uplink wavelength of the first ONU is different from any uplink wavelengths of the second ONU. Therefore, the first ONU does not require cooling, and complexity and costs of a PON system are reduced.

All or some of the foregoing embodiments may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, actually, two consecutive steps or two blocks in the illustration, which are dependent on an involved function, may be executed at substantially the same time, or these blocks may sometimes be executed in a reverse order.

A person of ordinary skill in the art may be aware that the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

## Claims

1. A communication method for a passive optical network, PON, wherein the PON comprises an optical line terminal, OLT and a first optical network unit, ONU, and the method comprises:
communicating, by the OLT, with the first ONU by using one downlink wavelength λdx, wherein the one downlink wavelength λdx is any one of N downlink wavelengths λd1 to λdN; and
communicating, by the OLT, with the first ONU by using one uplink wavelength λu0, wherein the one uplink wavelength λu0 is different from any one of M uplink wavelengths λu1 to λuM; and
the N downlink wavelengths λd1 to λdN and the M uplink wavelengths λu1 to λuM are wavelength values configured for a second ONU, N and M are both integers greater than or equal to 2, and x is any value from 1 to N (comprising 1 and N).

2. The method according to claim 1, wherein an allowable center wavelength operating range of the one uplink wavelength λu0 is different from an allowable center wavelength operating range of any one of the M uplink wavelengths λu1 to λuM.

3. The method according to claim 1 or 2, wherein the method comprises:
sending, by the OLT, a registration message to the first ONU by using the one downlink wavelength λdx; and
receiving, by the OLT, a registration response message from the first ONU by using the one uplink wavelength λu0.

4. The method according to claim 1 or 2, wherein the method comprises:
sending, by the OLT, a timeslot grant message to the first ONU by using the one downlink wavelength λdx, wherein the timeslot grant message comprises a granted timeslot of the one uplink wavelength λu0; and
receiving, by the OLT, an uplink signal from the first ONU by using the granted timeslot of the one uplink wavelength λu0.

5. A communication method for a passive optical network PON, wherein the PON comprises an optical line terminal OLT and a first optical network unit ONU, and the method comprises:
communicating, by the first ONU, with the OLT by using one downlink wavelength λdx, wherein the one downlink wavelength λdx is any one of N downlink wavelengths λd1 to λdN; and
communicating, by the first ONU, with the OLT by using one uplink wavelength λu0, wherein the one uplink wavelength λu0 is different from any one of M uplink wavelengths λu1 to λuM; and
the N downlink wavelengths λd1 to λdN and the M uplink wavelengths λu1 to λuM are wavelength values configured for a second ONU, N and M are both integers greater than or equal to 2, and x is any value from 1 to N (comprising 1 and N).

6. The method according to claim 5, wherein an allowable center wavelength operating range of the one uplink wavelength λu0 is different from an allowable center wavelength operating range of any one of the M uplink wavelengths λu1 to λuM.

7. The method according to claim 5 or 6, wherein the method comprises:
receiving, by the first ONU, a registration message from the OLT by using the one downlink wavelength λdx; and
sending, by the first ONU, a registration response message to the OLT by using the one uplink wavelength λu0.

8. The method according to claim 5 or 6, wherein the method comprises:
receiving, by the first ONU, a timeslot grant message from the OLT by using the one downlink wavelength λdx, wherein the timeslot grant message comprises a granted timeslot of the one uplink wavelength λu0; and
sending, by the first ONU, an uplink signal to the OLT by using the granted timeslot of the one uplink wavelength λu0.

9. An optical line terminal OLT applied to a passive optical network PON, wherein the PON comprises the optical line terminal OLT and a first optical network unit ONU, and the OLT comprises:
an optical transmitter, configured to communicate with the first ONU by using one downlink wavelength λdx, wherein the one downlink wavelength λdx is any one of N downlink wavelengths λd1 to λdN; and
an optical receiver, configured to communicate with the first ONU by using one uplink wavelength λu0, wherein the one uplink wavelength λu0 is different from any one of M uplink wavelengths λu1 to λuM; and
the N downlink wavelengths λd1 to λdN and the M uplink wavelengths λu1 to λuM are wavelength values configured for a second ONU, N and M are both integers greater than or equal to 2, and x is any value from 1 to N (comprising 1 and N).

10. The OLT according to claim 9, wherein an allowable center wavelength operating range of the one uplink wavelength λu0 is different from an allowable center wavelength operating range of any one of the M uplink wavelengths λu1 to λuM.

11. The OLT according to claim 9 or 10, wherein:
the optical transmitter is configured to send a registration message to the first ONU by using the one downlink wavelength λdx; and
the optical receiver is configured to receive a registration response message from the first ONU by using the one uplink wavelength λu0.

12. The OLT according to claim 9 or 10, wherein:
the optical transmitter is configured to send a timeslot grant message to the first ONU by using the one downlink wavelength λdx, wherein the timeslot grant message comprises a granted timeslot of the one uplink wavelength λu0; and
the optical receiver is configured to receive an uplink signal from the first ONU by using the granted timeslot of the one uplink wavelength λu0.

13. An optical network unit ONU applied to a passive optical network PON, wherein the PON comprises an optical line terminal OLT and a first optical network unit ONU, and the ONU comprises:
an optical receiver, configured to communicate with the OLT by using one downlink wavelength λdx, wherein the one downlink wavelength λdx is any one of N downlink wavelengths λd1 to λdN; and
an optical transmitter, configured to communicate with the OLT by using one uplink wavelength λu0, wherein the one uplink wavelength λu0 is different from any one of M uplink wavelengths λu1 to λuM; and
the N downlink wavelengths λd1 to λdN and the M uplink wavelengths λu1 to λuM are wavelength values configured for a second ONU, N and M are both integers greater than or equal to 2, and x is any value from 1 to N (comprising 1 and N).

14. The ONU according to claim 13, wherein an allowable center wavelength operating range of the one uplink wavelength λu0 is different from an allowable center wavelength operating range of any one of the M uplink wavelengths λu1 to λuM.

15. The ONU according to claim 13 or 14, wherein:
the optical receiver is configured to receive a registration message from the OLT by using the one downlink wavelength λdx; and
the optical transmitter is configured to send a registration response message to the OLT by using the one uplink wavelength λu0.

16. The ONU according to claim 13 or 14, wherein:
the optical receiver is configured to receive a timeslot grant message from the OLT by using the one downlink wavelength λdx, wherein the timeslot grant message comprises a granted timeslot of the one uplink wavelength λu0; and
the optical transmitter is configured to send an uplink signal to the OLT by using the granted timeslot of the one uplink wavelength λu0.

17. A computer readable storage medium, comprising an instruction, wherein when running on a computer, the instruction makes the computer execute the method according to any one of claims 1 to 4.

18. A computer readable storage medium, comprising an instruction, wherein when running on a computer, the instruction makes the computer execute the method according to any one of claims 5 to 8.

19. A computer program product that comprises an instruction, wherein when running on a computer, the instruction makes the computer execute the method according to any one of claims 1 to 4.

20. A computer program product that comprises an instruction, wherein when running on a computer, the instruction makes the computer execute the method according to any one of claims 5 to 8.

21. A passive optical network PON, wherein the PON comprises the optical line terminal OLT according to any one of claims 9 to 12 and the optical network unit ONU according to any one of claims 13 to 16.
